# EUROPÄISCHE PATENTSCHRIFT

(11) **EP 1 825 174 B1**
(45) Veröffentlichungstag und Bekanntmachung des Hinweises auf die Patenterteilung: **01.07.2009**
(21) Anmeldenummer: 05816269.4
(22) Anmeldetag: 23.11.2005
(51) Int. Cl.: F16J 15/32, F01D 11/00, F16J 15/447

(54) **LAMELLENDICHTUNG, INSBESONDERE FÜR EINE GASTURBINE**
LAMELLAR SEAL, ESPECIALLY FOR A GAS TURBINE
JOINT LAMELLAIRE, NOTAMMENT POUR UNE TURBINE A GAZ

(30) Priorität: 11.12.2004 DE 102004059858
(43) Veröffentlichungstag der Anmeldung: 29.08.2007
(73) Patentinhaber: Alstom Technology Ltd, 5400 Baden (CH)
(72) Erfinder: HOEBEL, Matthias, Dr., 5210 Windisch (CH); RHODES, Nigel, Anthony, Dr., Leicestershire LE9 9LY (GB); SOMMERSIDE, Ian, James, Dr., 5400 Baden (CH)
(86) Internationale Anmeldenummer: PCT/EP2005/056164
(87) Internationale Veröffentlichungsnummer: WO 2006/061324

(56) Entgegenhaltungen:
- EP-A- 1 479 953
- US-A- 5 755 445
- US-A1- 2003 071 423
- US-B1- 6 267 381

## Beschreibung

### TECHNISCHES GEBIET

Die vorliegende Erfindung bezieht sich auf das Gebiet der Dichtung von rotierenden Maschinen. Sie betrifft eine Lamellendichtung gemäss dem Oberbegriff des Anspruchs 1.

### STAND DER TECHNIK

Eine Gasturbine besteht aus einem Rotor, auf dem verschiedene Stufen mit Verdichterschaufeln und Turbinenschaufeln angebracht werden, sowie einem Statorgehäuse. Der Rotor wird an jedem Ende der Rotorwelle in Lagern montiert.

Die Steuerung des Gasstroms innerhalb der Gasturbine ist von überragender Bedeutung im Hinblick sowohl auf die Funktionalität als auch die Effektivität. An verschiedenen Stellen entlang der Rotorwelle werden Dichtungs-Technologien verwendet, um den axialen Gasstrom entlang der Welle zu verringern. Dieses ist besonders wichtig neben den Lagern, um zu verhindern, dass das Öl, das in den Lagern benutzt wird, durch die heissen Gase des Gasstroms überhitzt.

Traditionsgemäß werden in dieser Situation zwei Arten von Dichtungs-Technologien - meist alternativ, manchmal auch miteinander kombiniert - benutzt. Dies sind Labyrinthdichtungen und Bürstendichtungen.

Labyrinthdichtungen haben keinen Metall-Metall-Kontakt zwischen dem Rotor und dem Stator; daher ist ihr Dichtungseffekt verhältnismäßig klein. Jedoch bieten sie den Vorteil der niedrigen Rotationsreibung und der deswegen praktisch unbegrenzten Lebensdauer.

Bürstendichtungen andererseits haben höhere Reibungsverluste wegen der Reibung zwischen den Borstenenden und der Rotorwelle. Dies hat eine Abnutzung zur Folge, welche die Lebensdauer der Dichtung begrenzt. Die Bürstendichtungen bieten jedoch eine bessere Hemmung des axialen Gasstroms, besonders bei höheren axialen Druckdifferenzen.

Der Gebrauch dieser Technologien für das Abdichten in den Gasturbinen hat zahlreiche Einschränkungen. Erstens ist die axiale Druckdifferenz, der sie widerstehen können, noch ziemlich niedrig. Im Falle der Bürstendichtungen liegt dies an den Borsten, welche die gleiche Steifheit in axialer und in Umfangsrichtung haben: Hohe Drücke können die Borsten veranlassen, in axialer Richtung auf sich selbst zurückzublasen. Auch ist die Fähigkeit der Dichtungen, eine bedeutende Radialbewegung zuzulassen und ihr zu widerstehen, niedrig.

Das Design einer Bürstendichtung ist häufig ein Kompromiss zwischen dem Verwenden einer Unterstützungsplatte, die genügend axiale Unterstützung geben soll, und dem Nicht-Einschränken der Radialbewegung.

Um die Nachteile der bekannten Bürstendichtungen zu vermeiden, ist in der US-B1-6,267,381 eine Lamellendichtung ("leaf seal") vorgeschlagen worden, welche die gleiche Funktion wie entweder eine Labyrinthdichtung oder eine Bürstendichtung ausübt, aber die Vorteile von beiden aufweist. Anstelle der Borsten, die aus Drähten mit kreisförmigen Querschnitt hergestellt werden, werde dünnen Metalllamellen oder -blätter in bestimmter Anordnung zusammengebaut (siehe z.B. die Fig. 2 der US-B1-6,267,381 oder die Fig. 1 der vorliegenden Anmeldung). Die Lamellen, die mit ihren Flächen im wesentlichen parallel zur axialen Richtung orientiert sind, sind in der axialen Richtung viel steifer als in Umfangsrichtung. So kann die Dichtung höheren Druckdifferenzen widerstehen, ohne dabei deren Möglichkeiten zum Zulassen von Radialbewegungen einzuschränken. Auch bietet der breite Bereich auf dem Rotor, der von den Spitzen der Lamellen überstrichen wird, die Gelegenheit, während des Betriebes eine hydrodynamische Kraft zu erzeugen, welche die Lamellenspitzen von der Welle trennen kann. Auf diese Weise kann ein Abstand von einigen Mikron erzeugt und beibehalten werden, so dass die Abnutzung, die Reibungshitze und die Reibungsverluste bis fast auf Null verringert werden.

Das grundlegende Design bezieht eine Anzahl von dünnen Metalllamellen ein, die zwischen sich einen kontrollierten Luftspalt aufweisen und in einem vorgegebenen Winkel zum Radius befestigt werden. Der Luftspalt ist ein kritischer Designparameter: Er ermöglicht das Auftreten eines Luftstroms, um damit den hydrodynamischen Effekt zu erzeugen; er darf aber nicht so groß sein, um einen übermässigen axialen Leckstrom zu erlauben.

Zwei Varianten des Lamellendichtungs-Designs sind möglich: Bei der einen Variante werden die Lamellen nach unten geblasen, bei der anderen dagegen aufwärts. Die Variante mit den nach unten geblasenen Lamellen schliesst ein, dass man einen Abstand zwischen den Lamellenspitzen und der Welle während dem Zusammenbau und dem Anfahren hat, und dass dieser Spalt durch den Einsatz eines Luftstroms zwischen den Lamellen auf sehr kleine Werte heruntergefahren wird. Andererseits schliesst die Variante mit dem Aufwärtsblasen ein, dass man während des Anfahrens eine geringfügige gegenseitige Beeinflussung zwischen den Lamellenspitzen und der Welle hat, und einen Abstand erzeugt, wenn die Welle beschleunigt. In beiden Fällen ist die Strömung des Mediums durch die Luftspalte zwischen den Lamellen kritisch, ebenso wie die Steuerung des inneren Durchmessers der Dichtung, der durch die Lamellenspitzen erzeugt wird.

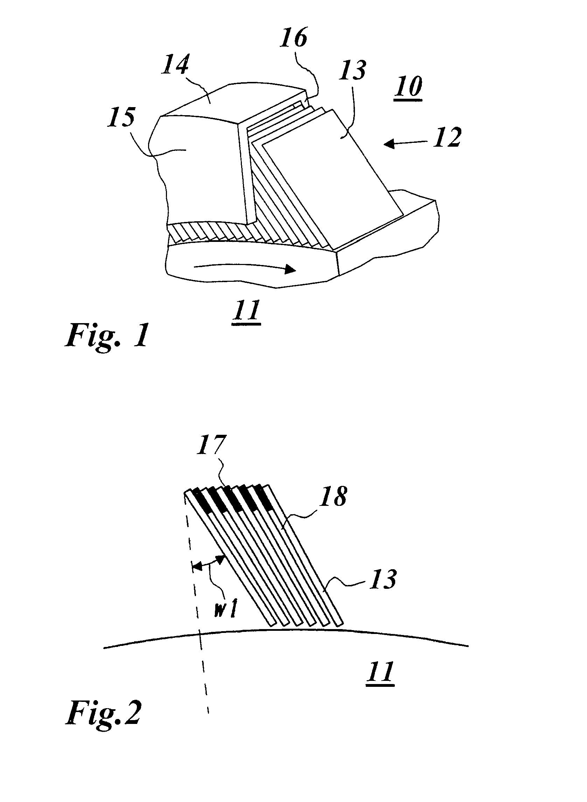

Der Luftstrom durch die Lamellen kann durch Verwendung einer vorderen und einer hinteren Platte verändert werden, die einen schmalen Spalt zwischen den Oberflächen des Lamellenpakets und den Platten frei lassen (siehe die o.g. Fig. 1). Ein sorgfältiges Design dieser Geometrien macht es möglich, die Aufwärts- oder Abwärtsblaseffekte zu steuern. Auch kann es wünschenswert sein, den Abwärtsblaseffekt durch eine aktive Druckzufuhr entlang der Länge der Lamellen oder nach innen von der Frontseite oder von den rückseitigen Richtungen zu unterstützen.

Einer der anderen Hauptvorteile des Lamellendichtungskonzeptes ist eine grössere Toleranz der Radialbewegung als bei den Labyrinth- oder Bürstendichtungen. Dies erfordert dort einen grossen Abstand zwischen dem inneren Durchmesser der vorderen und rückseitigen Platten und der Welle.

Abhängig von der gewählten Geometrie für die Dichtung, und von dem Durchmesser der zu dichtenden Welle, kann die Anzahl der Lamellen einige Tausend oder zig Tausende betragen. Die Genauigkeit, mit der diese hergestellt, zusammengebaut und verbunden werden können, wobei ein reproduzierbarer Luftspalt zwischen jedem Paar von Lamellen sichergestellt wird, ist kritisch für die erfolgreiche Implementierung jedes möglichen Dichtungsdesigns.

Das Fügeverfahren zum Fixieren der Lamellen in ihrer Position könnte eine mechanische Technik, wie Festklemmen, Schweissen oder Hartlöten oder jede mögliche Kombination davon sein. Es ist ganz offensichtlich wichtig, dass eine minimale Störung der Lamellen oder ihrer relativen Positionen während des Fügeprozesses auftritt.

Aus der EP-A1-1 479 953 ist eine Lamellendichtung bekannt, die sich durch integrierte Abstandshalter und eine symmetrische Ausgestaltung der einzelnen Lamellen auszeichnet.

Aus der US-A1-2003/0071423 ist eine Rotordichtung bekannt, die durch zickzackförmiges Falten eines Streifens erzeugt wird und damit untereinander zusammenhängende Lamellen aufweist.

### DARSTELLUNG DER ERFINDUNG

Es ist daher Aufgabe der Erfindung, eine Lamellendichtung zu schaffen, welche die Nachteile bekannter Lamellendichtungen vermeidet und sich insbesondere durch eine verbesserte Handhabung, Positionierung und Halterung der Lamellen auszeichnet.

Die Aufgabe wird durch die Gesamtheit der Merkmale des Anspruchs 1 gelöst. Der Kern der Erfindung besteht darin, bei den einzelnen Lamellen jeweils angeformte Mittel zur Positionierung und Halterung der Lamellen in der Lamellendichtung vorzusehen. Hierdurch wird sowohl bei der Handmontage als auch bei der automatisierten Montage die Zusammenstellung der Lamellen zu Lamellenpaketen und deren Weiterverarbeitung zur fertigen Lamellendichtung erleichtert, vereinfacht und mit erhöhter Präzision durchführbar gemacht.

Gemäss der Erfindung umfassen die Mittel zur Positionierung und Halterung der Lamellen einen oder mehrere seitlich abstehende Ausleger, die bezüglich einer in Längsrichtung verlaufenden Mittellinie der Lamellen asymmetrisch ausgebildet sind.

Die Asymmetrie kann dadurch erreicht werden, dass nur auf einer Seite ein Ausleger vorgesehen ist.

Es ist aber auch denkbar, dass zwei gegenüberliegende Ausleger vorgesehen sind, die seitlich unterschiedlich weit abstehen.

Weiterhin ist kann eine Asymmetrie dadurch herbeigeführt werden, dass zwei gegenüberliegende Ausleger vorgesehen sind, die sich in Längsrichtung gesehen auf unterschiedlichen Höhen befinden.

Zur Einstellung eines Abstands zwischen aufeinanderfolgenden Lamellen in der Lamellendichtung sind vorzugsweise Distanzelemente vorgesehen; die Ausleger sind dabei im Bereich der Distanzelemente angeordnet.

Insbesondere bewährt hat sich, dass die Distanzelemente im äusseren Endbereich der Lamellen angeordnet sind.

Die Distanzelemente können als integrale Elemente an den Lamellen als Bereiche grösserer Dicke ausgebildet sein.

Die Distanzelemente können aber auch als in die Lamellen eingeprägte Elemente ausgebildet sein, wobei vorzugsweise jede Lamelle in radialer Richtung wenigstens zwei hintereinander angeordnete, eingeprägte Distanzelemente aufweist, welche die relative Position der Lamellen zueinander festlegen.

Es ist aber auch denkbar, dass die Distanzelemente als separate Elemente ausgebildet sind.

Damit Luft in die Zwischenräume zwischen den Lamellen eingeführt werden kann, ist es von Vorteil, wenn im Bereich der Ausleger bzw. Distanzelemente in den Lamellen senkrecht zur Lamellenebene Durchgangsöffnungen vorgesehen sind.

Eine weitere Verbesserung der Eigenschaften der Lamellendichtung lässt sich dadurch erreichen, dass an den Lamellen zusätzliche Elemente zur Beeinflussung der mechanischen und/oder strömungstechnischen Eigenschaften der Lamelle vorgesehen sind. Die zusätzlichen Elemente sind vorzugsweise als an einer Längskante und der unteren Querkante verlaufende Rippen ausgebildet, die an einer Ecke der Lamelle ineinander übergehen. Besonders günstige mechanische Eigenschaften der Lamelle ergeben sich, wenn die Lamelle einen Kopfteil aufweist, an welchem sie in der Lamellendichtung befestigt ist, und wenn die an der Längskante verlaufende Rippe vor dem Kopfteil endet.

Schliesslich kann die Befestigung der Lamellen in der Lamellendichtung dadurch verbessert werden, dass die Lamellen jeweils in einen Kopfteil mit dem Distanzelement und einen Dichtungsteil unterteilt sind, und dass der Dichtungsteil gegenüber dem Kopfteil geneigt ist.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer perspektivischen Seitenansicht den typischen Aufbau einer Lamellendichtung, wie sie bei einer Gasturbine Anwendung findet;
- Fig. 2: in der Seitenansicht in Achsrichtung die aus der radialen Richtung geneigte Anordnung einzelner Lamellen mit ihren dazwischen liegenden Distanzelementen;
- Fig. 3: die Ansicht einer zu Fig. 1 vergleichbaren Lamellendichtung in Umfangsrichtung mit einer vorderen und hinteren Endplatte;
- Fig.4: in der Ansicht in Achsrichtung ein Paket von Lamellen mit gegenüber den Kopfteilen gekippten Dichtungsteilen gemäss einem bevorzugten Ausführungsbeispiel der Erfindung;
- Fig. 5: in der Ansicht in Achsrichtung ein Paket von Lamellen mit integralen Distanzelementen konstanter Dicke gemäss einem anderen bevorzugten Ausführungsbeispiel der Erfindung;
- Fig. 6: in einer zu Fig. 6 vergleichbaren Darstellung ein Paket von Lamellen mit integralen, geprägten Paaren von Distanzelementen gemäss einem anderen bevorzugten Ausführungsbeispiel der Erfindung;
- Fig. 7: in verschiedenen Teilfiguren (Fig. 7a-d) einzelne Lamellen mit symmetrischen und asymmetrischen Auslegern zur Erleichterung der Zusammenstellung gemäss einem weiteren bevorzugten Ausführungsbeispiel der Erfindung;
- Fig. 8: eine Lamelle mit integralem Distanzelement, einer Durchgangsöffnung zur Bildung eines Plenums und Luftführungskanälen gemäss einem anderen bevorzugten Ausführungsbeispiel der Erfindung;
- Fig. 9: eine Lamelle mit zugehörigem separaten Distanzelement zur Bildung eines Plenums und Kontrolle der Luftzufuhr gemäss einem anderen bevorzugten Ausführungsbeispiel der Erfindung;
- Fig. 10: die alternative Anordnung von Lamelle und Distanzelement aus Fig. 9; und
- Fig. 11: eine Lamelle mit integralem Distanzelement und zusätzlichen Rippen im Dichtungsteil zur Versteifung und Luftführung gemäss einem anderen bevorzugten Ausführungsbeispiel der Erfindung.

### WEGE ZUR AUSFÜHRUNG DER ERFINDUNG

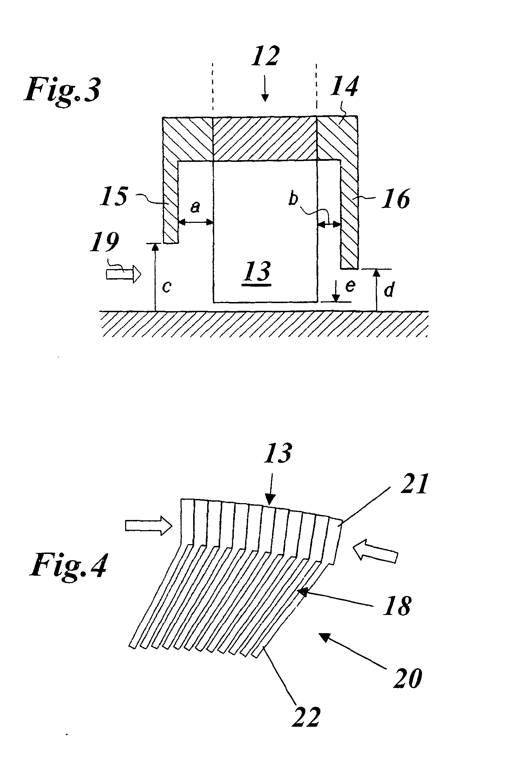

In Fig. 1 ist in einer perspektivischen Seitenansicht der typische Aufbau einer Lamellendichtung dargestellt, wie sie bei einer Gasturbine Anwendung findet. Die Lamellendichtung 12 dichtet eine in Pfeilrichtung rotierende Rotorwelle 11 der Gasturbine 10 gegen ein Gehäuse 14. Im kreisringförmigen Zwischenraum zwischen der Rotorwelle 11 und dem Gehäuse 14 ist in einem Ring ein Paket von eng voneinander beabstandeten dünnen Lamellen 13 angeordnet. Die Lamellen 13 sind mit ihrer Fläche parallel zur Drehachse der Maschine orientiert. Die Lamellen sind gemäss Fig. 2 aus der radialen Richtung um einen Winkel w1 verkippt und haben zwischen sich jeweils einen schmalen Spalt bzw. Zwischenraum 18, der vorzugsweise durch zwischen den Lamellen 13 angeordnete Distanzelemente 17 festgelegt wird. Die Distanzelemente 17 der Fig. 2 sind als separate Elemente dargestellt. Sie können aber auch - wie in Fig. 4-6 und 11 gezeigt - in die Lamellen integriert sein.

Gemäss Fig. 1 und 3 kann der Luftstrom durch die Lamellen 13 durch Verwendung einer vorderen und einer hinteren Endplatte 15 bzw. 16 verändert werden, die einen schmalen Spalt zwischen den Oberflächen des Lamellenpakets und den Endplatten 15, 16 frei lassen (Abstände a und b in Fig. 3). Ein sorgfältiges Design dieser Geometrien macht es möglich, die eingangs erwähnten Aufwärts- oder Abwärtsblaseffekte zu steuern. Auch kann es wünschenswert sein, den Abwärtsblaseffekt durch eine aktive Druckzufuhr entlang der Länge der Lamellen oder nach innen von der Frontseite oder von den rückseitigen Richtungen zu unterstützen.

Einer der anderen Hauptvorteile des in Fig. 1 bzw. 3 dargestellten Lamellendichtungskonzeptes ist eine grössere Toleranz der Radialbewegung als bei den Labyrinth- oder Bürstendichtungen. Dies erfordert einen grossen Abstand zwischen dem inneren Durchmesser der vorderen und rückseitigen Endplatten 15, 16 und der Rotorwelle 11 (Abstände c und d in Fig. 3). Der Spalt zwischen den Lamellen 13 und der Rotorwelle (Abstand e in Fig. 3) beträgt nur wenige Mikron.

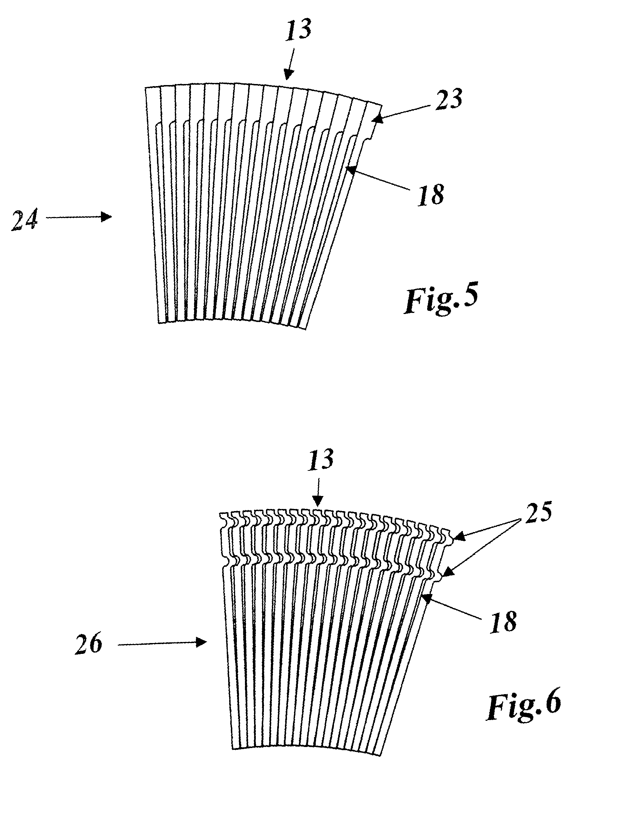

Die Lamellen 13 können mit einem integralen Distanzelement hergestellt werden, so dass kein separates Distanzelement benötigt wird, um den notwendigen Luftspalt zwischen den Lamellen herzustellen, wenn die Lamellen in der Lamellendichtung zusammengeführt und miteinander verbunden werden. Die integralen Distanzelemente können auf unterschiedliche Weise erzeugt werden, wie dies in den Fig. 5 und 6 dargestellt ist. Gemäss Fig. 5 werden die Lamellen 13 der Lamellendichtung 24 mit Bereichen unterschiedlicher Dicke hergestellt. Die Bereiche mit der grösseren Dicke wirken als Distanzelemente 23, aufgrund derer ein Spalt 18 zwischen den aktiven Dichtungsbereichen der benachbarten Lamellen entsteht. Die unterschiedlichen Dicken können beispielsweise durch photochemische Bearbeitung der für die Lamellen verwendeten Metallbleche erzeugt werden. Alternativ können ausgewählte Bereiche durch ein Druckverfahren wie z.B. Siebdruck oder Tintenstrahldruck maskiert werden, um nachfolgend die nicht-maskierten Bereiche durch Ätzen in der Dicke zu reduzieren oder durch einen Plattierungsprozess in der Dicke zu vergrössern.

Gemäss Fig. 6 können in die Lamellen13 der Lamellendichtung 26 mittels eines Prägeverfahrens integrale Distanzelemente 25 in Form von Sicken eingeprägt werden, die in radialer Richtung hintereinander mit Abstand angeordnet sind. Innerhalb des Prägeverfahrens können gleichzeitig die Lamellen 13 als Ganzes aus einem gewalzten Metallblech ausgestanzt werden. Die geprägten Distanzelemente 25 verleihen der Lamellenpackung eine Biegeelastizität, die während des Zusammenbaus der Lamellendichtung benutzt werden kann, um die Grösse des Luftspaltes 18 zu steuern.

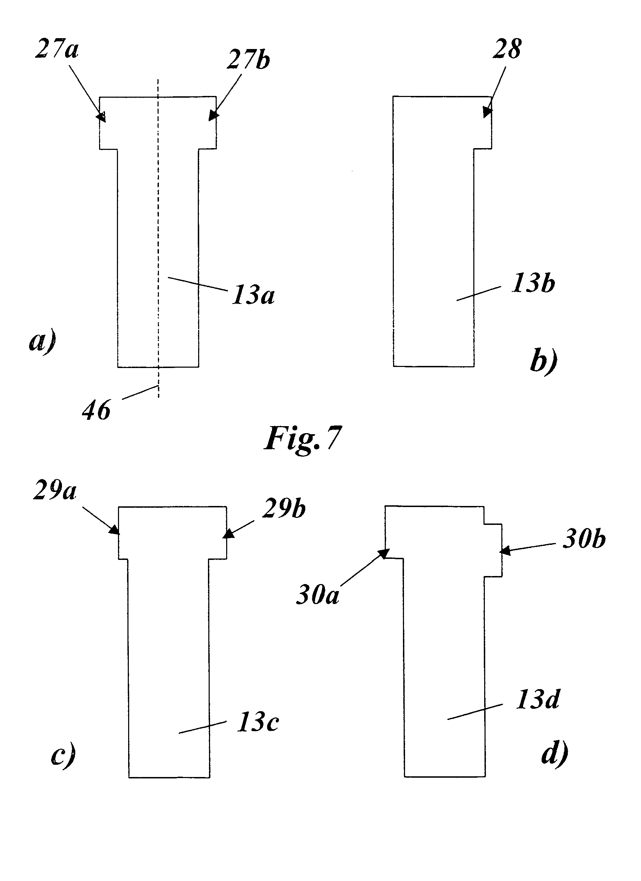

Von besonderer Wichtigkeit für die Handhabung und Positionierung der einzelnen Lamellen und ihre Zusammenstellung in dem die Lamellendichtung bildenden Lamellenpaket sind an den Lamellen angeformte Mittel zur Positionierung und Halterung der Lamellen. Lamellen 13a-d gemäss Fig. 7 mit angeformten Auslegern 27a,b, 28, 29a,b oder 30a,b, die im oberen Teil der Lamelle seitlich zu einer oder zu zwei gegenüberliegenden Seiten abstehen, erleichtern die (automatisierte) Zusammenstellung der Lamellen in einer Halterung vor dem nachfolgenden Fügeprozess. Der oder die Ausleger 27a,b, 28, 29a,b und 30a,b erlauben eine definierte Positionierung in radialer Richtung und helfen bei der Kontrolle des Kippwinkels der Lamellen.

Die in Fig. 7a gezeigte Lamelle 13a hat zwei Ausleger 27a,b, die zur Mittellinie 46 symmetrisch ausgebildet sind. Besonders vorteilhaft ist jedoch eine Ausgestaltung der Ausleger, die bezüglich der Mittellinie 46 eine gewisse Asymmetrie aufweist, wie dies bei den Ausführungsformen der Fig. 7b-d der Fall ist. Wenn der Zusammenbau der Lamellendichtung mit der Hand erfolgt, ermöglicht es die Asymmetrie der zusammenbauenden Person, mögliche falsch zusammengestellte Lamellen leicht zu erkennen, oder der Zusammenbau der Dichtung wird durch die falsch zusammengestellten Lamellen von vornherein unmöglich gemacht.

Wenn der Zusammenbau automatisiert ist, ist die korrekte Zuführung der Teile in der korrekten Ausrichtung entscheidend. In diesem Fall ermöglicht die Asymmetrie die Anwendung automatisierter Ausrichtungsverfahren, die auf einer Abweichung des geometrischen Zentrums vom Zentrum der Masse beruhen.

Im Beispiel der Fig. 7b wird die Asymmetrie an der Lamelle 13b dadurch erzeugt, dass nur auf einer Seite ein Ausleger 28 vorgesehen ist. Im Beispiel der Fig. 7c hat die Lamelle 13c zwei gegenüberliegende Ausleger 29a und 29b, die unterschiedlich weit seitlich vorstehen und dadurch eine Asymmetrie erzeugen. Im Beispiel der Fig. 7d sind bei der Lamelle 13d zwei Ausleger 30a und 30b in Längsrichtung auf unterschiedlicher Höhe angeordnet.

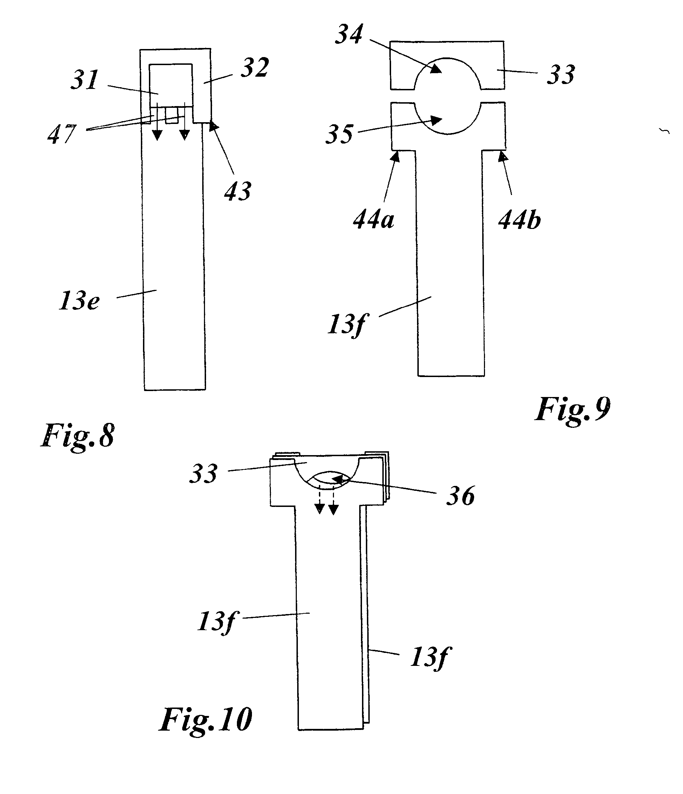

Bei den in Fig. 7 gezeigten Ausführungsbeispielen sind die Ausleger an dem (oberen) Ende der Lamelle angeordnet, an dem die Lamelle in der Lamellendichtung auch fixiert wird. Es kann jedoch in gewissen Fällen auch denkbar und wünschenswert sein, die Ausleger an anderen Stellen der Lamelle vorzusehen. In jedem Fall müssen die Ausgestaltungen der Ausleger auch bei separaten Distanzelementen berücksichtigt werden, sofern in der Lamellendichtung separate Distanzelemente verwendet werden (siehe dazu auch Fig. 9 und 10).

Wenn die Ausleger mechanisch stabil ausgebildet sind, kann sich eine metallurgische Verbindung zwischen den Lamellen erübrigen. Die strukturelle Positionierung und Halterung der Lamellen kann dann durch das Gehäuse (siehe 14 in Fig. 1) bewirkt werden, in welchem die Ausleger untergebracht sind.

Für Lamellendichtungen mit der Möglichkeit einer aktiven Luftzufuhr zur Unterstützung des Abwärtsblaseffekts oder des Blaseffekts können spezielle Ausgestaltungen bei den Lamellen vorgesehen werden. Derartige mit der Luftzufuhr verbundene Ausgestaltungen sind in den Fig. 8, 9 und 10 wiedergegeben. Die Luftzufuhr kann in radialer Richtung oder über die Vorderseite der Lamellenpackung erfolgen. Mittels Durchgangsöffnungen 31 bzw. 36 in den einzelnen Lamellen 13e bzw. den Stapeln aus Lamellen 13f und Distanzelementen 33 wird eine kreisringförmige Kammer in der Lamellenpackung gebildet, die als Plenum wirkt.

Wenn - wie im Fall der Fig. 8 - ein integrales Distanzelement 32 (mit einem asymmetrischen Ausleger 43) verwendet wird, können das Plenum und die gerichtete Luftzufuhr durch eine Durchgangsöffnung 31 und davon ausgehende Kanäle 47 erreicht werden. Die Luft strömt dann in Richtung der eingezeichneten Pfeile durch die Kanäle 47 in den Spalt zwischen den benachbarten Lamellen.

Wenn - wie im Fall der Fig. 9 und 10 - separate Distanzelemente 33 verwendet werden, können das Plenum und die gerichtete Luftzufuhr durch eine Überlagerung von halbkreisförmigen Ausnehmungen 34, 35 oder vergleichbaren Geometrien in den alternierend angeordneten Lamellen 13f und Distanzelementen 33 erzeugt werden.

Weiterhin kann es für eine exakte Zusammenstellung und erleichterte Verbindung der Lamellen von Vorteil sein, wenn gemäss Fig. 4 der Kopfteil 21 der Lamellen in radialer Richtung orientiert ist, während der blattartige Dichtungsteil 22 demgegenüber um einen geeigneten Winkel geneigt ist. Insbesondere bewirken die in Fig. 4 durch Blockpfeile angedeuteten Presskräfte, die beim Zusammenbau der Lamellendichtung 20 zur Sicherstellung einer dichtesten Packung angelegt werden, kein Abgleiten der Lamellen relativ zueinander (dies ist nicht der Fall, wenn sich Kopfteil 21 und Dichtungsteil 22 in einer Ebene befinden). Die in Fig. 4 dargestellte Geometrie ermöglicht es auch, die gesamte Fläche der integralen Distanzelemente für die Verbindung der Lamellen zu benutzen.

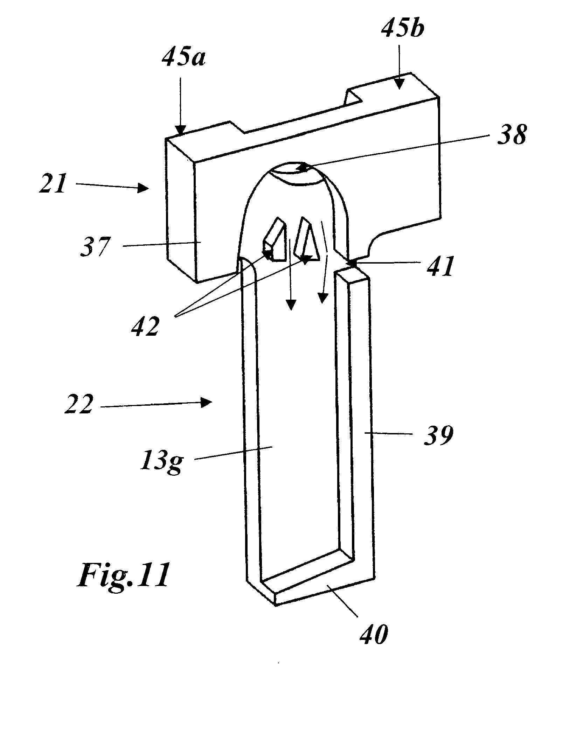

Das (photo-chemische oder anderweitige) Verfahren zur Herstellung (Strukturierung) der Lamellen kann auch dazu herangezogen werden, zusätzliche Elemente zur Beeinflussung der mechanischen und/oder strömungstechnischen Eigenschaften der Lamelle zu erzeugen. Derartige zusätzliche Elemente können gemäss Fig. 11 als an einer Längskante und der unteren Querkante verlaufende Rippen 39, 40 ausgebildet sein, die an einer Ecke der Lamelle 13g ineinander übergehen. Die Rippen 39, 40 erhöhen die Steifigkeit der Lamelle 13g, reduzieren den axialen Luftverlust, verhindern in Verdrehen der Lamellen und unterstützen die Führung der Luftströmung beim Aufwärts- oder Abwärtsblaseffekt.

Die Rippen 39, 40 können bei der Bearbeitung der Lamellen 13g zusammen mit dem integralen Distanzelement 37 ausgebildet werden, dass ebenfalls seitliche Ausleger 45a und 45b, sowie eine Durchgangsöffnung 38 zur Bildung eines Plenums aufweist. Des weiteren können Leitelemente 42 für die radiale Luftströmung ausgebildet werden. Die Steifigkeit der Lamellen 13g kann weiterhin durch Ausbildung eines (in der Dicke reduzierten) Scharnierbereichs 41 zwischen dem integralen Distanzelement 37 und der Rippe 39 beeinflusst werden. Die an der Längskante verlaufende Rippe 39 endet vor dem Kopfteil 21 der Lamelle 13g. Der Dichtungsteil 22 der Lamelle 13g kann so aufgrund der Rippe 39 vergleichsweise steif sein, während durch den Scharnierbereich 41 nach wie vor die elastische Biegsamkeit der Lamelle in radialer Richtung erhalten bleibt.

### BEZUGSZEICHENLISTE

- 10: Gasturbine
- 11: Rotorwelle
- 12: Lamellendichtung
- 13,13a-g: Lamelle
- 14: Gehäuse
- 15,16: Endplatte
- 17,33: Distanzelement (separat)
- 18: Spalt (Zwischenraum)
- 19: Gasstrom
- 20,24,26: Lamellendichtung
- 21: Kopfteil
- 22: Dichtungsteil
- 23,32: Distanzelement (integral)
- 25: Distanzelement (geprägt)
- 27a,b: Ausleger
- 28: Ausleger
- 29a,b: Ausleger
- 30a,b: Ausleger
- 31,36,38: Durchgangsöffnung
- 34,35: Ausnehmung
- 37: Distanzelement (integral)
- 39: Rippe (Längsrichtung)
- 40: Rippe (Querrichtung)
- 41: Scharnierbereich
- 42: Leitelement
- 43: Ausleger
- 44a,b: Ausleger
- 45a,b: Ausleger
- 46: Mittellinie
- 47: Kanal
- a,..,e: Abstand
- w1: Winkel

## Patentansprüche

1. Lamellendichtung (12) zur Abdichtung einer um eine Achse rotierenden Welle, insbesondere in einer Gasturbine (10), welche Lamellendichtung (12) eine Vielzahl von untereinander beabstandeten Lamellen (13; 13a-g) umfasst, die in einem konzentrischen Kreis um die Achse herum angeordnet und in ihrer Position fixiert sind, wobei die Lamellen (13; 13a-g) mit ihren Flächen im wesentlichen parallel zu der Achse orientiert sind, wobei die Lamellen (13; 13a-g) jeweils angeformte Mittel (28, 29a,b; 30a,b; 43; 45a,b) zur Positionierung und Halterung der Lamellen (13; 13a-g) in der Lamellendichtung (12) aufweisen, welche Mittel entweder einen seitlich abstehenden Ausleger (28, 43) umfassen, oder, mehrere seitlich abstehenden Ausleger (29a,b; 30a,b; 45a,b) umfassen, bezüglich einer in Längsrichtung verlaufenden Mittellinie (46) der Lamellen (13; 13a-g) asymmetrisch ausgebildet sind.

2. Lamellendichtung nach Anspruch 1, **dadurch gekennzeichnet, dass** nur auf einer Seite ein Ausleger (28) vorgesehen ist.

3. Lamellendichtung nach Anspruch 1, wobei zwei gegenüberliegende Ausleger (29a, b) vorgesehen sind, die seitlich unterschiedlich weit abstehen.

4. Lamellendichtung nach Anspruch 1, wobei zwei gegenüberliegende Ausleger (29a, b) vorgesehen sind, die sich in Längsrichtung gesehen auf unterschiedlichen Höhen befinden.

5. Lamellendichtung nach einem der Ansprüche 1 bis 4, wobei zur Einstellung eines Abstands (18) zwischen aufeinanderfolgenden Lamellen (13; 13a-g) in der Lamellendichtung (12) Distanzelemente (23, 25, 32, 33) vorgesehen sind, und dass die Ausleger (28, 29a,b; 30a,b; 43; 45a,b) im Bereich der Distanzelemente (23, 25, 32, 33, 37) angeordnet sind.

6. Lamellendichtung nach Anspruch 5, wobei die Distanzelemente (23, 25, 32, 33, 37) im äusseren Endbereich der Lamellen (13; 13ag) angeordnet sind.

7. Lamellendichtung nach Anspruch 5 oder 6, wobei die Distanzelemente (23, 25, 32, 37) an den Lamellen (13; 13a-g) als Bereiche grosserer Dicke ausgebildet sind.

8. Lamellendichtung nach Anspruch 5 oder 6, wobei die Distanzelemente (25) als in die Lamellen (13) eingeprägte Elemente ausgebildet sind.

9. Lamellendichtung nach Anspruch 8, wobei jede Lamelle (13) in radialer Richtung wenigstens zwei hintereinander angeordnete, eingeprägte Distanzelemente (25) aufweist, welche die relative Position der Lamellen zueinander festlegen.

10. Lamellendichtung nach Anspruch 5, wobei die Distanzelemente (33) als separate Elemente ausgebildet sind.

11. Lamellendichtung nach einem der Ansprüche 5 bis 10, wobei im Bereich der Ausleger (28, 29a,b; 30a, b; 43; 45a,b) bzw. Distanzelemente (23, 25, 32, 33, 37) in den Lamellen (13e-g) senkrecht zur Lamellenebene Durchgangsöffnungen (31, 38) vorgesehen sind.

12. Lamellendichtung nach Anspruch 1, wobei an den Lamellen (13g) zusätzliche Elemente (39, 40) zur Beeinflussung der mechanischen und/oder strömungstechnischen Eigenschaften der Lamelle vorgesehen sind.

13. Lamellendichtung nach Anspruch 12, wobei die zusätzlichen Elemente als an einer Längskante und der unteren Querkante verlaufende Rippen (39, 40) ausgebildet sind.

14. Lamellendichtung nach Anspruch 13, wobei die beiden Rippen (39, 40) an einer Ecke der Lamelle (13g) ineinander übergehen.

15. Lamellendichtung nach Anspruch 13 oder 14, wobei die Lamelle (13g) einen Kopfteil (21) aufweist, an welchem sie in der Lamellendichtung (12) befestigt ist, und dass die an der Längskante verlaufende Rippe (39) vor dem Kopfteil (21) endet.

16. Lamellendichtung nach Anspruch 7, wobei die Lamellen (13) jeweils in einen Kopfteil (21) mit dem Distanzelement und einen Dichtungsteil (22) unterteilt sind, und dass der Dichtungsteil (22) gegenüber dem Kopfteil (21) geneigt ist.

## Claims

1. Leaf seal (12) for sealing a shaft rotating about an axis, in particular in a gas turbine (10), which leaf seal (12) comprises a multiplicity of spaced-apart leaves (13; 13a-g) which are arranged in a concentric circle around the axis and are fixed in their position, the leaves (13; 13a-g), with their surface, being oriented essentially parallel to the axis, the leaves (13; 13a-g) each having integrally formed means (28, 29a, b; 30a, b; 43; 45a, b) for positioning and retaining the leaves (13; 13a-g) in the leaf seal (12), which means either comprise a laterally projecting arm (28; 43), or comprise a plurality of laterally projecting arms (29a, b; 30a, b; 45a, b), which are of asymmetrical design relative to a center line (46), running in the longitudinal direction, of the leaves (13; 13a-g).

2. Leaf seal according to Claim 1, **characterized in that** an arm (28) is provided only on one side.

3. Leaf seal according to Claim 1, two opposite arms (29a, b) which project laterally to a different extent being provided.

4. Leaf seal according to Claim 1, two opposite arms (29a, b) being provided which are located at different heights as viewed in the longitudinal direction.

5. Leaf seal according to one of Claims 1 to 4, spacers (23, 25, 32, 33) being provided in order to set the distance (18) between successive leaves (13; 13a-g) in the leaf seal (12), and the arms (28, 29a, b; 30a, b; 43; 45a, b) being arranged in the region of the spacers (23, 25, 32, 33, 37).

6. Leaf seal according to Claim 5, the spacers (23, 25, 32, 33, 37) being arranged in the outer end region of the leaves (13; 13a-g).

7. Leaf seal according to Claim 5 or 6, the spacers (23, 25, 32, 37) being formed on the leaves (13; 13a-g) as regions of greater thickness.

8. Leaf seal according to Claim 5 or 6, the spacers (25) being designed as elements embossed in the leaves (13).

9. Leaf seal according to Claim 8, each leaf (13), in the radial direction, having at least two embossed spacers (25) which are arranged one behind the other and fix the position of the leaves relative to one another.

10. Leaf seal according to Claim 5, the spacers (33) being designed as separate elements.

11. Leaf seal according to one of Claims 5 to 10, in the region of the arms (28, 29a, b; 30a, b; 43; 45a, b) or spacers (23, 25, 32, 33, 37), through-holes (31, 38) being provided in the leaves (13eg) perpendicularly to the leaf plane.

12. Leaf seal according to Claim 1, additional elements (39, 40) for influencing the mechanical and/or fluidic properties of the leaf being provided on the leaves (13g).

13. Leaf seal according to Claim 12, the additional elements being designed as ribs (39, 40) running on a longitudinal edge and on the bottom transverse edge.

14. Leaf seal according to Claim 13, the two ribs (39, 40) merging into one another at a corner of the leaf (13g).

15. Leaf seal according to Claim 13 or 14, the leaf (13g) having a head part (21), at which it is fastened in the leaf seal (12), and the rib (39) running on the longitudinal edge ending in front of the head part (21).

16. Leaf seal according to Claim 7, the leaves (13) each being subdivided into a head part (21) having the spacer and a sealing part (22), and the sealing part (22) being inclined relative to the head part (21).

## Revendications

1. Joint lamellaire (12) pour réaliser l'étanchéité d'un arbre tournant autour d'un axe, en particulier dans une turbine à gaz (10), lequel joint lamellaire (12) comprend une pluralité de lamelles (13 ; 13a-g) espacées les unes des autres, qui sont disposées dans un cercle concentrique autour de l'axe et sont fixées en position, les lamelles (13 ; 13a-g) étant orientées avec leurs surfaces essentiellement parallèlement à l'axe, les lamelles ((13 ; 13a-g) présentant à chaque fois des moyens façonnés (28, 29a,b ; 30a,b ; 43 ; 45a,b) pour le positionnement et la fixation des lamelles (13 ; 13a-g) dans le joint lamellaire (12), lesdits moyens comprenant soit un bras saillant latéralement (28 ; 43) soit plusieurs bras saillant latéralement (29a,b ; 30a,b ; 45a,b), qui sont réalisés asymétriquement par rapport à un axe médian (46) des lamelles (13; 13a-g) s'étendant dans la direction longitudinale.

2. Joint lamellaire selon la revendication 1, **caractérisé en ce qu'**un bras (28) n'est prévu que d'un côté.

3. Joint lamellaire selon la revendication 1, dans lequel deux bras opposés (29a,b) sont prévus, lesquels font saillie latéralement à des distances différentes.

4. Joint lamellaire selon la revendication 1, dans lequel deux bras opposés (29a,b) sont prévus, lesquels se trouvent à des hauteurs différentes, vus dans la direction longitudinale.

5. Joint lamellaire selon l'une quelconque des revendications 1 à 4, dans lequel, pour ajuster une distance (18) entre des lamelles successives (13 ; 13a-g) dans le joint lamellaire (12), on prévoit des éléments d'espacement (23, 25, 32, 33), et en ce que les bras (28, 29a,b ; 30a,b ; 43 ; 45a,b) sont disposés dans la région des éléments d'espacement (23, 25, 32, 33, 37).

6. Joint lamellaire selon la revendication 5, dans lequel les éléments d'espacement (23, 25, 32, 33, 37) sont disposés dans la région d'extrémité extérieure des lamelles (13 ; 13a-g).

7. Joint lamellaire selon la revendication 5 ou 6, dans lequel les éléments d'espacement (23, 25, 32, 37) sont réalisés sur les lamelles (13 ; 13a-g) sous forme de régions de relativement grande épaisseur.

8. Joint lamellaire selon la revendication 5 ou 6, dans lequel les éléments d'espacement (25) sont réalisés sous forme d'éléments imprimés dans les lamelles (13).

9. Joint lamellaire selon la revendication 8, dans lequel chaque lamelle (13) présente dans la direction radiale au moins deux éléments d'espacement (25) imprimés, disposés l'un derrière l'autre.

10. Joint lamellaire selon la revendication 5, dans lequel les éléments d'espacement (33) sont réalisés sous forme d'éléments séparés.

11. Joint lamellaire selon l'une quelconque des revendications 5 à 10, dans lequel, dans la région des bras (28, 29a,b ; 30a,b ; 43 ; 45a,b), ou des éléments d'espacement (23, 25, 32, 33, 37), on prévoit dans les lamelles (13e-g) des ouvertures de passage (31, 38) perpendiculaires au plan des lamelles.

12. Joint lamellaire selon la revendication 1, dans lequel on prévoit sur les lamelles (13g) des éléments supplémentaires (39, 40) pour influer sur les propriétés mécaniques et/ou fluidiques des lamelles.

13. Joint lamellaire selon la revendication 12, dans lequel les éléments supplémentaires sont réalisés sous forme de nervures (39, 40) s'étendant sur une arête longitudinale et l'arête transversale inférieure.

14. Joint lamellaire selon la revendication 13, dans lequel les deux nervures (39, 40) se prolongent l'une dans l'autre au niveau d'un coin des lamelles (13g).

15. Joint lamellaire selon la revendication 13 ou 14, dans lequel la lamelle (13g) présente une partie de tête (21) sur laquelle elle est fixée dans le joint lamellaire (12), et en ce que la nervure (39) s'étendant sur l'arête longitudinale se termine avant la partie de tête (21).

16. Joint lamellaire selon la revendication 7, dans lequel les lamelles (13) sont à chaque fois divisées en une partie de tête (21) avec l'élément d'espacement et une partie d'étanchéité (22), et en ce que la partie d'étanchéité (22) est inclinée par rapport à la partie de tête (21).
